# EUROPÄISCHE PATENTSCHRIFT

(11) **EP 3 661 715 B1**
(45) Veröffentlichungstag und Bekanntmachung des Hinweises auf die Patenterteilung: **05.10.2022**
(21) Anmeldenummer: 18759261.3
(22) Anmeldetag: 03.08.2018
(51) Int. Cl.: B29C 31/06, B29C 45/18, B29C 67/24, B29K 83/00

(54) **ZUFÜHRUNGSVORRICHTUNG ZUM ZUFÜHREN VON PASTÖSEN MASSEN**
SUPPLY DEVICE FOR SUPPLYING PASTY MASSES
DISPOSITIF D'AMENÉE POUR L'AMENÉE DE SUBSTANCES PÂTEUSES

(30) Priorität: 03.08.2017 DE 102017117622
(43) Veröffentlichungstag der Anmeldung: 10.06.2020
(73) Patentinhaber: Klöckner Desma Elastomertechnik GmbH, 78567 Fridingen (DE)
(72) Erfinder: GLÜCKLER, Raphael, 78580 Bärenthal (DE)
(74) Vertreter: Schneiders & Behrendt Bochum
(86) Internationale Anmeldenummer: PCT/EP2018/071182
(87) Internationale Veröffentlichungsnummer: WO 2019/025612

(56) Entgegenhaltungen:
- EP-A1- 0 995 572
- EP-A1- 1 777 060
- WO-A1-2013/123099
- FR-A1- 2 495 052
- JP-A- H1 134 107
- US-A- 2 338 607
- US-A- 6 059 559
- Anonym: "LSR (Liquid Silicone Rubber) - babyplast", , 7. September 2009 (2009-09-07), Seiten 1-2, XP055530864, Gefunden im Internet: URL:http://www.ft.sg/pdf/BabyPlast%20LSR.p df [gefunden am 2018-12-06]
- Anonym: "LSR-Baukasten für babyplast", , 11. Oktober 2012 (2012-10-11), Seiten 1-2, XP055530841, Gefunden im Internet: URL:https://www.kunststoffe.de/produkte/ue bersicht/beitrag/lsr-baukasten-fuer-babypl ast-mikrospritzgiessen-mit-lsr--566965.htm l [gefunden am 2018-12-06]
- BROWN ANITA JUL ET AL: "LSR injection molding equipment built specifically for micro sized applications", INTERNET CITATION, Juni 2001 (2001-06), XP002410879, Gefunden im Internet: URL:http://www.accessmylibrary.com/coms2/s ummary_0286-10418164_ITM [gefunden am 2006-12-08]
- Bob Pelletier: "LSR Part III--Choosing a Mixing/Metering System", , 23. August 2011 (2011-08-23), Seiten 1-5, XP055530572, Gefunden im Internet: URL:https://www.ptonline.com/blog/post/get ting-into-lsr-part-iii---choosing-a-mixing metering-system [gefunden am 2018-12-05]
- Anonym: "LSR-Spritzeinheit", , 19. Juni 2008 (2008-06-19), Seiten 1-2, XP055530159, Gefunden im Internet: URL:http://www.retechgmbh.ch/SimpleContent Manager/plugins/Filemanager/Files/LSR_Spri tzeinheit.pdf?PHPSESSID=432290ed9c79b476c8 91e57dfac89192 [gefunden am 2018-12-04]

## Beschreibung

Die Erfindung betrifft eine Zuführungsvorrichtung zum Zuführen von pastösen Massen, insbesondere von Silikon, zu einer Spritzgießmaschine, mit einem die pastöse Masse aufnehmenden Presszylinder und einem axial in diesem Presszylinder angeordneten Presskolben, der die pastöse Masse aus einer Auspressdüse des Presszylinders herauspresst.

Solche Zuführungsvorrichtungen sind bekannt und werden vornehmlich an industriellen Spritzgießmaschinen eingesetzt. Mit solchen Spritzgießmaschinen werden Spritzgussteile für die unterschiedlichsten Anwendungen hergestellt.

Bei Verwendung der Zuführvorrichtungen nach dem Stand der Technik wird die meist in Blockform oder ungeformt angelieferte pastöse Masse, zum Beispiel Silikon, in den Presszylinder gestopft, anschließend mit dem in den Presszylinder einschiebbaren Presskolben komprimiert und dann mit hohem Druck über die Auspressdüse aus dem Presszylinder herausgepresst. Wegen dieser Vorgehensweise werden solche Vorrichtungen im Handel auch als Silikonstopfer bezeichnet.

Die nach dem Stand der Technik bekannten Zuführungsvorrichtungen sind in vielerlei Hinsicht problematisch. Da die für das Herauspressen der pastösen Masse erforderlichen Drücke verhältnismäßig groß sind und mehr als 70 bar betragen können, muss der Presszylinder entsprechend robust sein und besteht dementsprechend wie auch der Presskolben aus einem hochfesten, metallischen Werkstoff. Außerdem muss die Abdichtung zwischen Presszylinder und Presskolben dicht, langlebig und dementsprechend verschleißfest sein. Um die Viskosität der pastösen Masse herabzusetzen, ist es darüber hinaus oft erforderlich, den Presszylinder beheizbar auszubilden. Ein weiteres Problem besteht darin, dass beim Füllen des Presszylinders oft unbeabsichtigt Luft in den Innenraum des Presszylinders gelangt, die umständlich entfernt werden muss, weil sie den Pressvorgang behindert oder negative Auswirkungen auf die pastöse Masse haben kann. Schwierigkeiten ergeben sich weiterhin, wenn aufeinanderfolgend unterschiedliche pastöse Massen zum Einsatz kommen sollen, zum Beispiel Massen mit unterschiedlicher Farbe oder unterschiedlicher Konsistenz. In diesem Fall muss der Presszylinder jeweils umständlich entleert und gereinigt werden, damit es nicht zu unerwünschten Durchmischungen der unterschiedlichen pastösen Massen kommt. Somit führt fast jeder Wechsel der einzusetzenden pastösen Masse zu einem erheblichen Materialverlust im Bereich der Zuführungsvorrichtung.

Alle oben aufgeführten Probleme führen einerseits zu unerwünschten Betriebsunterbrechungen der Spritzgießmaschine und andererseits zu Materialverlusten.

Die US 6059559 A und EP 0 995 572 A1 offenbaren Zuführungsvorrichtungen zum Zuführen von pastösen Massen wie zum Beispiel Silikon zu einer Spritzgießmaschine, wobei der Presszylinder als die pastöse Masse enthaltende Kartusche ausgebildet ist. Die Zuführungsvorrichtung der US 6059559 A weist eine Zweiplatten-Ausstosseinheit auf, mit einer oberen Klemmplatte und einer untere Klemmplatte, wobei die obere Klemmplatte zu der unteren Klemmplatte 52 bewegbar ist. Mittel zum Klemmen umfassend Zylinder, Stütz- und Führungsstangen, um die obere Platte in Richtung der unteren Platte zu ziehen, wodurch eine entfernbare Kartusche zwischen den Kartuschen geklemmt und abgestützt wird. An der unteren Platte ist ein hydraulischer Zylinder befestigt, dessen Stange mit einem Kolben zum Ausstoßen des Materials in der Kartusche angebracht ist.

Die WO 2013/123099 A1 offenbart eine Zuführungsvorrichtung in der Kartuschen verwendet werden. Die Kartusche wird in einem Injektorgehäuse aufgenommen, welches auch als ein Strukturelement dient, um auf die Kräfte zu reagieren, die während der Druckbeaufschlagung auf die Kartusche ausgeübt werden. Kartusche und Injektorgehäuse sind nicht nur dafür ausgelegt, hohen Drücken und einem Vakuum im Allgemeinen standzuhalten, sondern auch hohen Temperaturen. Das Injektorgehäuse kann zwei Heizmanschetten umfassen, die eine zylindrische Isoliermanschette um die Kartusche bilden. Die beiden Heizmanschetten sind mit einer Seite gelenkig aneinander verbunden, sodass sie sich öffnen und schließen lassen. Die Heizmanschetten können abgerundet und gekrümmt sein, um im geschlossenen Zustand einen Zylinder oder eine anderen Körper zu bilden. Im offenen Zustand können die Heizmanschetten die Kartusche aufnehmen. Im geschlossenen Zustand umgeben die Heizmanschetten die Wände der Kartusche fest und umschließen sie.

Eine Zuführungsvorrichtung zum Zuführen von Silikon zu einer Spritzgießmaschine, mit einem die pastöse Masse aufnehmenden Presszylinder und einem axial in diesem Presszylinder angeordneten Presskolben, der die pastöse Masse aus einer Auspressdüse des Presszylinders herauspresst, wobei wobei der Presszylinder als die pastöse Masse enthaltende Kartusche ausgebildet ist, die aus einem Polymer besteht, wobei die Kartusche in eine Kartuschenaufnahme eingesetzt wird, ist bekannt durch RAMBALDI + CO SRL, 06 115 InfoBlattLSR12112007, LSR (Liquid Silicone Rubber) - babyplast, 7. September 2009, NPL-Nummer XP055530864, [abgerufen am 06.12.2018], abgerufen unter >http://www.ft.sg/pdf/BabyPlast %20LSR.pdf>.

Eine Zuführungsvorrichtung zum Zuführen von Silikon zu einer Spritzgießmaschine, wobei eine Abstützung der Kunststoff-Kartusche durch Kühlmanschetten erfolgt, so dass diese unter Förderdruck nicht ausbeult, ist bekannt durch BROWN, A. J. und KUNTZ, R., LSR injection molding equipment built specifically for micro sized applications, Rubber World, Juni 2001, NPL-Nummer XP002410879, [abgerufen am 08.12.2006], abgerufen unter >http://www.accessmylibrary.com/coms2/summary_0286-10418164_ITM>.

Es ist deshalb Aufgabe der Erfindung, die Zuführungsvorrichtung der eingangs genannten Art dahingehend weiterzubilden, dass unerwünschte Betriebsunterbrechungen der Spritzgießmaschine vermieden werden und ein aufeinanderfolgender Einsatz von unterschiedlichen pastösen Massen ohne Materialverluste innerhalb der Zuführungsvorrichtung ermöglicht werden kann.

Die Lösung der Aufgabe erfolgt durch eine Zuführungsvorrichtung nach Anspruch 1.

Aus Polymer hergestellte, mit Silikon oder einer vergleichbaren pastösen Masse gefüllte Kartuschen sind nach dem Stand der Technik zum Beispiel für den Einsatz im Bauhandwerk zwar seit langem bekannt. Der Einsatz von solchen Kartuschen in einer Zuführungsvorrichtung für eine Spritzgießmaschine war nach dem Stand der Technik indessen nicht möglich, weil eine solche aus Polymer hergestellte Kartusche den dort auftretenden Drücken auf keinen Fall standgehalten hätte. Eine Anordnung der auswechselbaren Kartusche in einem Stützgehäuse, welches die Kartusche allseitig abstützt und mit einem Stellantrieb für den in der Kartusche befindlichen Presskolben verbunden ist, ermöglicht den Einsatz von solchen Kartuschen in einer Zuführungsvorrichtung der erfindungsgemäßen Gattung.

Weil die Kartusche regelmäßig ausgewechselt wird, ist ein übermäßiger Verschleiß zwischen Presskolben und Presszylinder (hier Kartusche) nicht mehr zu befürchten. Weiterhin ist es möglich, den Inhalt der Kartusche bereits vor dem Einlegen in das Stützgehäuse auf die erforderliche Temperatur zu bringen, sodass die pastöse Masse immer sofort die benötigte Fließfähigkeit besitzt. Eine unmittelbare Beheizung der Zuführungsvorrichtung ist somit überflüssig. Da die Kartusche vollständig mit der pastösen Masse gefüllt ist, ist eine Entlüftung vor Beginn des Zufuhrvorganges überflüssig. Wenn die Kartusche leer ist bzw. eine andere pastöse Masse für das nächste Spritzgussteil bzw. die nächste Spritzgussserie benötigt wird, kann die Kartusche schnell und leicht ausgetauscht werden. Das Stützgehäuse als solches kommt beim Zuführungsvorgang nicht in Kontakt mit der pastösen Masse, sodass im Bereich der Zuführungsvorrichtung keine Reinigungsarbeiten mehr erforderlich sind. Sollte sich in der zuvor verwendeten Kartusche ein noch verwendbarer Rest an pastöser Masse befinden, kann diese Kartusche eingelagert werden und zu einem späteren Zeitpunkt weiterverwendet werden.

Erfindungsgemäß ist das Stützgehäuse modular ausgebildet und weist zwei den Mantel der Kartusche abstützende Halbschalen auf, die um eine parallel zur Längsachse der Kartusche verlaufende Schwenkachse gelenkig und seitlich aufklappbar miteinander verbunden sind, wobei der von den Halbschalen umschlossene Aufnahmeraum für die Kartusche axial vorn und hinten von Verschlussplatten begrenzt ist, von denen die vordere Verschlussplatte mit einer Durchtrittsöffnung für die Auspressdüse der Kartusche versehen ist, während die hintere Verschlussplatte mit einer Durchtrittsöffnung für eine auf den Presskolben der Kartusche einwirkende Schubstange des axialen Stellantriebes versehen ist. Dieser modulare Aufbau des Stützgehäuses ermöglicht einerseits ein schnelles Auswechseln der Kartuschen und gewährleistet andererseits die erforderliche allseitige und enge Abstützung der aus einem Polymer hergestellten Kartusche, welche ohne eine solche Abstützung nicht ausreichend druckfest wäre.

Weiterhin ist erfindungsgemäß vorgesehen, dass das Stützgehäuse einen starren, äußeren Stützkäfig aufweist, der von der vorderen Verschlussplatte, mindestens zwei parallel zur Längsachse der Kartusche verlaufende und außerhalb der Halbschalen angeordnete Zugstangen und einem parallel zu den Verschlussplatten verlaufenden Widerlagerrahmen gebildet wird, an welchem auf der dem Stützgehäuse abgewandten Seite der die Schubstange verschiebende Stellantrieb befestigt ist. Durch die Verwendung eines solchen Stützkäfigs können die Module des Stützgehäuses bei geöffnetem Stützgehäuse relativ zueinander beweglich bleiben, was für das mühelose Einlegen der Kartusche notwendig ist, und beim Schließen des Stützgehäuses gegeneinander verspannt werden, was im Hinblick auf die allseitige Stützfunktion des Stützgehäuses während des Auspressvorganges der Kartusche wichtig ist.

Um die Module des Stützgehäuses bei geschlossenem Stützgehäuse besonders fest miteinander zu verbinden, ist vorgesehen, dass die Halbschalen des Stützgehäuses an ihren Stirnseiten und die diesen Stirnseiten zugewandten Flächen der Abschlussplatten mit axial ineinandergreifenden Nut-Feder-Verbindungen versehen sind und dass die hintere Verschlussplatte relativ zu dem Stützkäfig bzw. zu der starr mit diesem verbundenen vorderen Abschlussplatte axial verschiebbar ist. Diese ringförmig ausgebildeten Nut-Feder-Verbindungen bilden bei geschlossenem Stützgehäuse formschlüssige Fügeverbindungen zwischen den Halbschalen und den Verschlussplatten, sodass das Stützgehäuse auch sehr große von der Kartusche ausgehende Kräfte abstützen kann.

Für die axiale Verschiebung der Module des Stützgehäuses nach Einlegen der Kartusche und das nachfolgende Auspressen der Kartusche ist vorgesehen, dass die Schubstange des axialen Stellantriebes nach Einlegen der Kartusche in das Stützgehäuse mittels einer Verriegelungsvorrichtung zunächst nur mit der hinteren Verschlussplatte und anschließend nur mit dem Presskolben der Kartusche verbindbar ist.

Um dafür Sorge zu tragen, dass die beiden Halbschalen und die Kartusche beim Einlegen der Kartusche und nachfolgenden Schließen des Stützgehäuses axial immer die benötigte Position einnehmen können, ist weiterhin vorgesehen, dass die untere Halbschale des Stützgehäuses axial unverschiebbar an der vorderen Verschlussplatte festgelegt ist und dass die obere Halbschale des Stützgehäuses bei geschlossenem Stützgehäuse und eingelegter Kartusche axial verschiebbar an dem Stützgehäusekäfig gelagert ist.

Um weiterhin dafür Sorge zu tragen, dass die Kartusche bei geschlossenem Stützgehäuse die korrekte axiale Position relativ zur oberen Halbschale hat, sieht die Erfindung vor, dass die Kartusche an ihrem Außenumfang mit einer umlaufenden Mitnehmernut versehen ist, in welche beim Verschließen des Stützgehäuses ein an der Innenseite der oberen Halbschale angeordneter Mitnehmervorsprung eingreift. Weiterhin ist die Kartusche mit einer umlaufenden Positioniernut versehen, in welche bei geöffnetem Stützgehäuse ein der oberen Halbschale zugeordnetes Schwenkblech eingreift. Hierdurch wird bereits beim Einlegen der Kartusche und vor dem Verschließen des Stützgehäuses die korrekte axiale Position der Kartusche in Bezug auf die obere Halbschale festlegt.

Um die Bewegungen der Schubstange des axialen Stellantriebs messen und steuern zu können, ist schließlich vorgesehen, dass der Schubstange des axialen Stellantriebs eine die jeweilige axiale Position feststellende Wegmeßvorrichtung zugeordnet ist. Diese Wegmeßvorrichtung macht es insbesondere möglich, den Auspressvorgang der Kartusche und damit die Menge der ausgepressten pastösen Masse dem Bedarf entsprechend zu begrenzen.

Ein Ausführungsbeispiel der Erfindung wird im folgenden anhand der Zeichnung näher erläutert. Es zeigen:

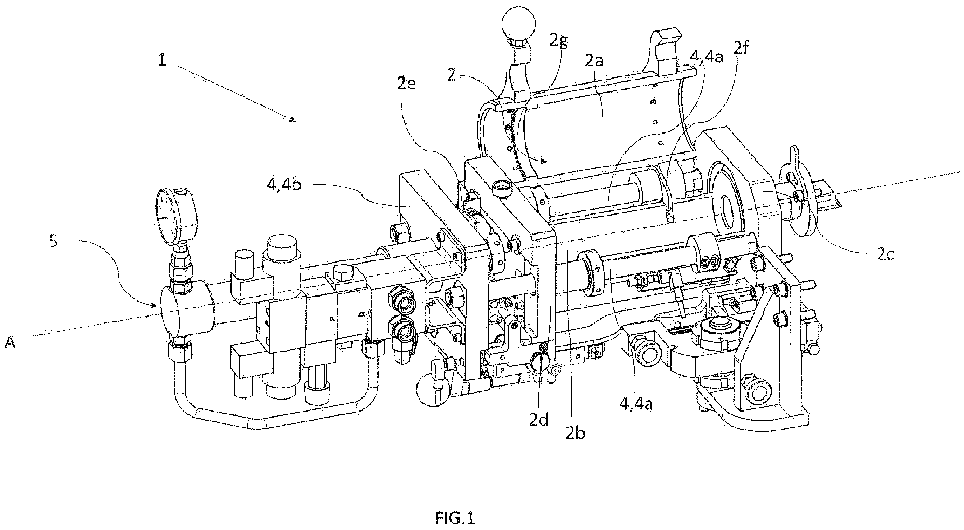

- Figur 1:: schematisch eine 3D- Ansicht einer Zuführungsvorrichtung gemäß der Erfindung mit geöffnetem Stützgehäuse ohne Kartusche in einer ersten Perspektive;
- Figur 2:: schematisch ein Längsschnitt durch eine in einer Zuführungsvorrichtung gemäß der Erfindung verwendbare Kartusche;
- Figur 3:: in gleicher Darstellung wie Figur 1 eine 3 D-Ansicht der Zuführungsvorrichtung mit geöffnetem Stützgehäuse und eingelegter Kartusche;
- Figur 4:: schematisch eine 3D-Ansicht der Zuführungsvorrichtung gemäß Figur 1 in einer zweiten Perspektive (ohne den Widerlagerrahmen und ohne den axialen Stellantrieb) bei geschlossenem, jedoch noch nicht verriegeltem Stützgehäuse;
- Figur 5:: in gleicher Darstellung wie Figur 4 die Zuführungsvorrichtung gemäß Figur 1 bei geschlossenem und verriegeltem Stützgehäuse.

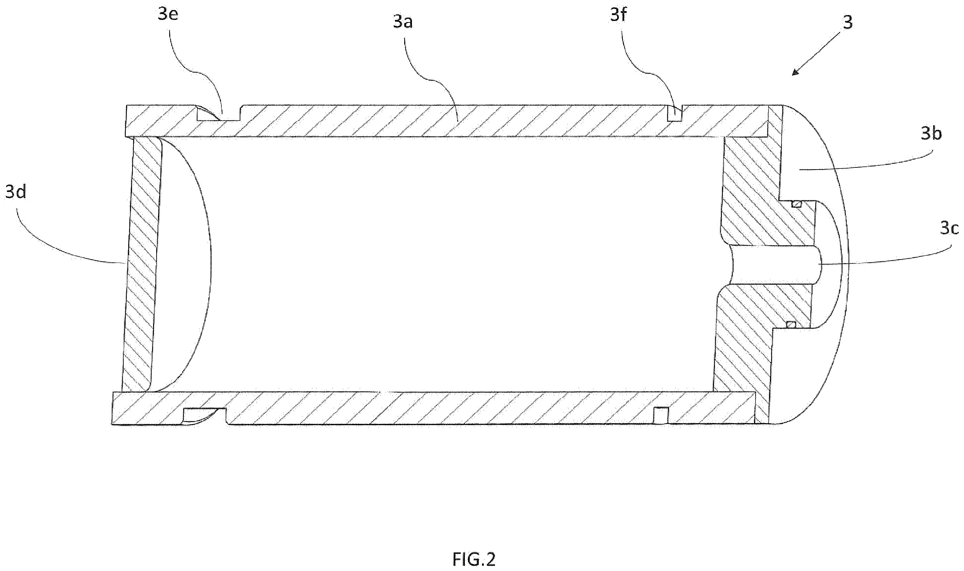

In der Zeichnung ist die Zuführungsvorrichtung in ihrer Gesamtheit mit dem Bezugszeichen 1 bezeichnet. Ein wesentlicher Bestandteil der Zuführungseinrichtung 1 ist ein modular ausgebildetes Stützgehäuse 2, welches eine untere Halbschale 2b, eine obere Halbschale 2a, eine vordere Verschlussplatte 2c und eine hintere Verschlussplatte 2d aufweist. Das Stützgehäuse 2 umschließt einen zylindrischen Aufnahmeraum, in welchen eine die zuzuführende pastöse Masse enthaltende Kartusche 3 (siehe Figur 2) auswechselbar einsetzbar ist.

Die in Figur 2 im Schnitt dargestellte Kartusche 3 ist insgesamt aus einem geeigneten Polymer hergestellt und weist einen Kartuschenzylinder 3a auf, der vorne durch eine Verschlussplatte 3b mit Auspressdüse 3c verschlossen ist und in den von hinten ein Presskolben 3d einschiebbar ist, der die in dem Kartuschenzylinder 3a enthaltene pastöse Masse aus der Kartusche 3 herauspresst.

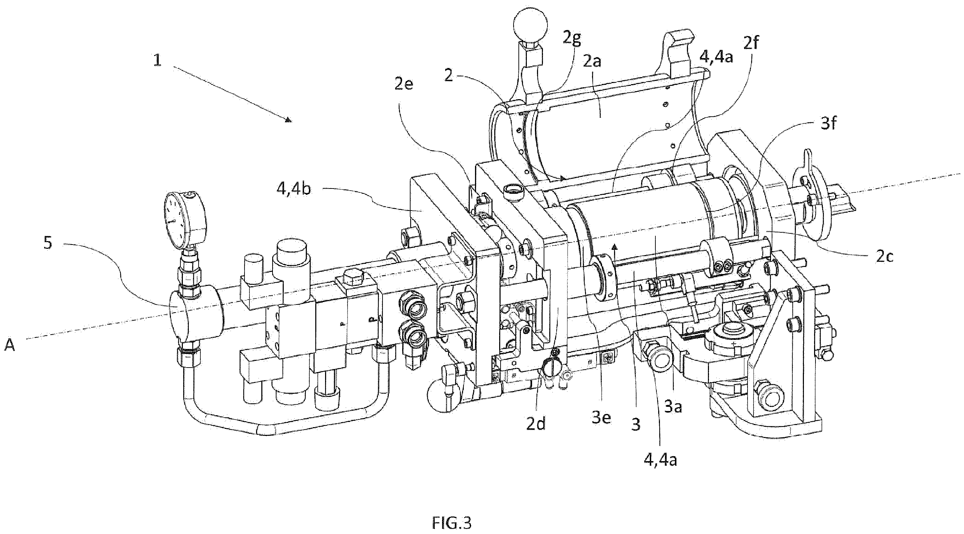

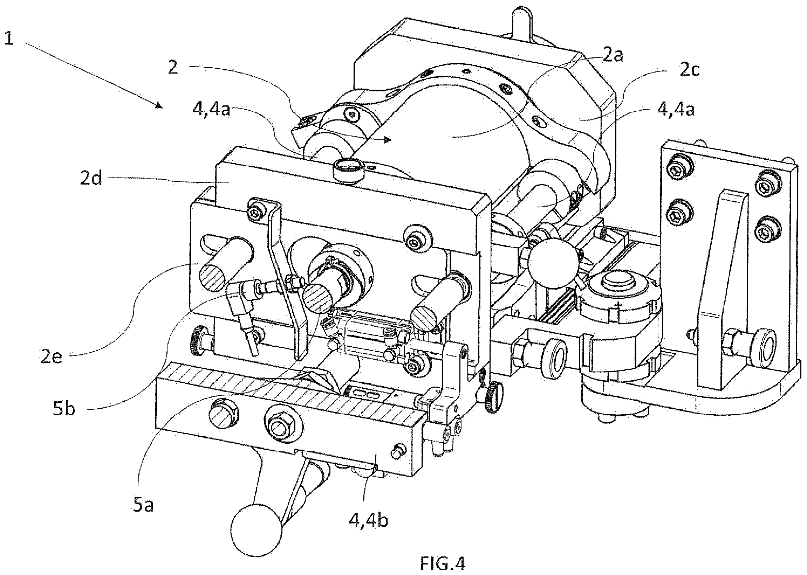

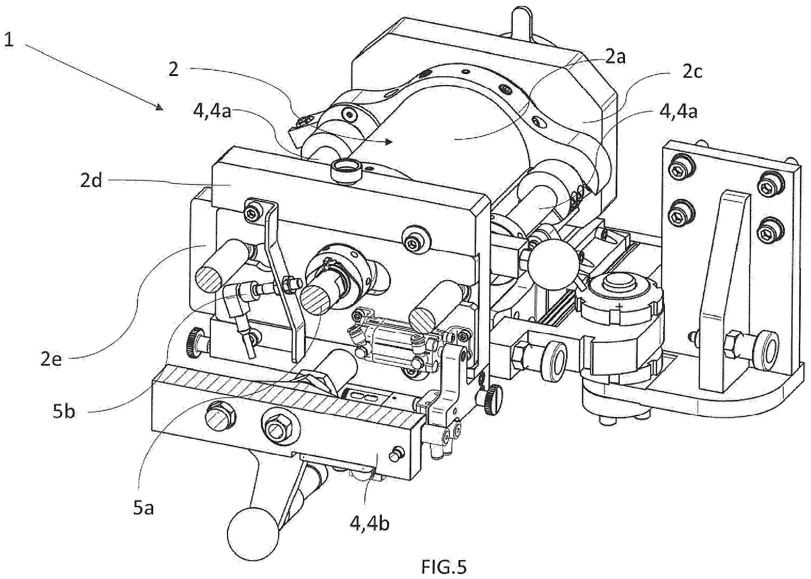

Weiterhin ist die Kartusche 3 an ihrem Außenumfang mit einer umlaufenden Mitnehmernut 3e und einer ebenfalls umlaufenden Positioniernut 3f versehen, deren Funktion weiter unten erläutert wird. Die Kartusche 3 kann, wie aus Figur 3 hervorgeht, in das Stützgehäuse 2 der Zuführungseinrichtung 1 auswechselbar eingelegt werden und wird bei geschlossenem Stützgehäuse 2 (vergl. Figuren 4 und 5) allseitig von dem Stützgehäuse 2 abgestützt. Dabei sind die vordere Verschlussplatte 2c des Stützgehäuses 2 mit einer Durchtrittsöffnung für die Auspressdüse 3c der Kartusche 3 und die hintere Verschlussplatte 2d des Stützgehäuses 2 mit einer Durchtrittsöffnung für eine auf den Presskolben 3d der Kartusche 3 einwirkende Schubstange eines weiter unten erläuterten axialen Stellantriebes (5) versehen.

Das Stützgehäuse 2 ist weiterhin mit einem äußeren Stützkäfig 4 versehen, der starr mit der vorderen Verschlussplatte 2c des Stützgehäuses 2 verbunden ist und zwei parallel zur Längsachse des Stützgehäuses 2 verlaufende Zugstangen 4a aufweist, die ihrerseits starr mit einem Widerlagerrahmen 4b verbunden sind, der parallel und mit Abstand zur hinteren Verschlussplatte 2d des Stützgehäuses 2 angeordnet ist.

Die hintere Verschlussplatte 2d und die obere Halbschale 2a des Stützgehäuses 2 sind axial verschiebbar auf den Zugstangen 4a des Stützkäfigs 4 gelagert und können unter Abstützung an dem Widerlagerrahmen 4b axial in Richtung auf die vordere Verschlussplatte 2c des Stützgehäuses 2 verschoben werden. Außerdem ist die obere Halbschale 2a des Stützgehäuses 2 derart verschwenkbar an einer der Zugstangen 4a des Stützkäfigs 4 gelagert, dass der zylindrische Innenraum des Stützgehäuses 2 durch Hochschwenken bzw. Herabschwenken der oberen Halbschale 2a für den Kartuschenwechsel geöffnet und geschlossen werden kann.

Weiterhin sind die beiden Halbschalen 2a und 2b des Stützgehäuses 2 an ihren Stirnseiten und die diesen Stirnseiten zugewandten Flächen der Verschlussplatten 2c und 2d des Stützgehäuses 2 mit ineinandergreifenden Nut-Feder-Verbindungen versehen, die beim axialen Verschieben der hinteren Verschlussplatte 2d in Richtung auf die vordere Verschlussplatte 2c axial ineinandergreifen und auf diese Weise bei verschlossenem Stützgehäuse 2 alle Module des Stützgehäuses 2 kraft- und formschlüssig an einander festlegen.

An dem Widerlagerrahmen 4b des Stützkäfigs 4 ist an der dem Stützgehäuse 2 abgewandten Seite ein axialer Stellantrieb 5 befestigt, dessen entlang der Längsachse A des Stützgehäuses 2 axial verschiebbare Schubstange 5a einerseits beim Auspressen der Kartusche 3 auf den Presskolben 3d der Kartusche 3 und andererseits beim axialen Zusammenschieben der Module des Stützgehäuses 2, d. h. beim Schließen des Stützgehäuses 2, auf die axial verschiebbare hintere Verschlussplatte 2d des Stützgehäuses 2 einwirkt. Hierzu ist im Bereich de Durchtrittsöffnung in der hinteren Verschlussplatte 2d des Stützgehäuses 2 ein als Verriegelungsvorrichtung dienendes Verriegelungsblech 2e angeordnet, welches in seiner Verriegelungsstellung eine zug-und druckfeste Verbindung zwischen der Schubstange 5b des axialen Stellantriebes 5 und der hinteren Verschlussplatte 2d der Stützgehäuses 2 herstellt, und in seiner Entriegelungstellung die Schubstange 5a für die Betätigung des Presskolben 3d der Kartusche 3 freigibt. Der axiale Stellantrieb 5 ist weiterhin mit einer Wegmeßvorrichtung 5b versehen, welche die jeweils aktuelle axiale Ausfahrposition der Schubstange 5a ermittelt und weitermeldet.

Um dafür Sorge zu tragen, dass die Kartusche 3 beim Kartuschenwechsel jeweils in der richtigen Position eingelegt wird, ist die hochschwenkbare obere Halbschale 2a des Stützgehäuses 2 mit einem Schwenkblech 2f versehen, welches bei hochgeschwenkter oberer Halbschale 2a die Positioniernut 3f der einzulegenden Kartusche 3 eingreift. Hierdurch wird sichergestellt, dass sich die Kartusche 3 axial exakt in derjenigen Position befindet, an der beim Herunterschwenken der oberen Halbschale 2a ein an deren Innenseite angeordneter Mitnehmervorsprung 2g in die oben erläuterte Mitnehmernut 3e am Außenumfang der Kartusche 3 eingreift. Zugleich gibt beim Herunterschwenken der oberen Halbschale 2a das Schwenkblech 2f die Kartusche 3 für Axialbewegungen frei. Durch diese Maßnahmen kann beim Schließen und Zusammenschieben der Module des Stützgehäuses 2 die obere Halbschale 2a die Auspressdüse 3c der Kartusche 3 abdichtend in die Durchtrittsöffnung in der vorderen Verschlussplatte 2c einschieben. Umgekehrt wird beim Öffnen des Stützgehäuses 2 die Auspressdüse 3c der Kartusche 3 mithilfe des Mitnehmervorsprunges 2g aus dieser Durchtrittsöffnung herausgezogen.

### Bezugszeichenliste:

- 1: Zuführungsvorrichtung
- 2: Stützgehäuse
- 2a: obere Halbschale
- 2b: untere Halbschale
- 2c: vordere Verschlussplatte
- 2d: hintere Verschlussplatte
- 2e: Verriegelungsblech
- 2f: Schwenkblech
- 2g: Mitnehmervorsprung
- 3: Kartusche
- 3a: Kartuschenzylinder
- 3b: Verschlussplatte
- 3c: Auspressdüse
- 3d: Presskolben
- 3e: Mitnehmernut
- 3f: Positioniernut
- 4: Stützkäfig
- 4a: Zugstangen
- 4b: Widerlagerrahmen
- 5: axialer Stellantrieb
- 5a: Schubstange
- 5b: Wegmessvorrichtung

## Patentansprüche

1. Zuführungsvorrichtung zum Zuführen von pastösen Massen, insbesondere von Silikon, zu einer Spritzgießmaschine, mit einem die pastöse Masse aufnehmenden Presszylinder und einem axial in diesem Presszylinder angeordneten Presskolben, der die pastöse Masse aus einer Auspressdüse des Presszylinders herauspresst,
- wobei der Presszylinder als die pastöse Masse enthaltende Kartusche (3) ausgebildet ist, die aus einem Polymer besteht und auswechselbar in ein Stützgehäuse (2) eingesetzt ist, welches die Kartusche (3) allseitig abstützt und mit einem axialen Stellantrieb (5) für den in der Kartusche (3) befindlichen Presskolben (3d) verbunden ist,
- wobei das Stützgehäuse (2) modular ausgebildet ist und zwei den Mantel der Kartusche (3) abstützende Halbschalen (2a, 2b) aufweist, die um eine parallel zur Längsachse der Kartusche (3) verlaufende Schwenkachse gelenkig und seitlich aufklappbar miteinander verbunden sind, wobei der von den Halbschalen (2a, 2b) umschlossene Aufnahmeraum für die Kartusche (3) axial vorn und hinten von Verschlussplatten (2c, 2d) begrenzt ist und die vordere Verschlussplatte (2c) mit einer Durchtrittsöffnung für die Auspressdüse (3c) der Kartusche (3) versehen ist, während die hintere Verschlussplatte (2d) mit einer Durchtrittsöffnung für eine auf den Presskolben (3d) der Kartusche (3) einwirkende Schubstange (5a) des axialen Stellantriebes (5) versehen ist und
- wobei das Stützgehäuse (2) einen starren, äußeren Stützkäfig (4) aufweist, der von der vorderen Verschlussplatte (2c), mindestens zwei parallel zur Längsachse (A) des Stützgehäuses (2)verlaufende und außerhalb der Halbschalen (2a, 2b) angeordnete Zugstangen (4a) und einem parallel zu den Verschlussplatten (2c, 2d) verlaufenden Widerlagerrahmen (4b) gebildet wird, an welchem auf der dem Stützgehäuse (2) abgewandten Seite der die Schubstange (5a) verschiebende axiale Stellantrieb (5) befestigt ist.

2. Zuführungsvorrichtung nach Anspruch 1, **dadurch gekennzeichnet, dass** die Halbschalen (2a, 2b) des Stützgehäuses (2) an ihren Stirnseiten und die diesen Stirnseiten zugewandten Flächen der Abschlussplatten (2c, 2b) mit axial ineinandergreifenden Nut-Feder-Verbindungen versehen sind, und dass die hintere Verschlussplatte (2d) relativ zu dem Stützkäfig (4) axial verschiebbar ist.

3. Zuführungsvorrichtung nach einem der Ansprüche 1-2, **dadurch gekennzeichnet, dass** die Schubstange (5a) des axialen Stellantriebes (5) nach dem Einlegen der Kartusche (3) in das Stützgehäuse (2) mittels einer Verriegelungsvorrichtung zunächst nur mit der hinteren Verschlussplatte (2d) des Stützgehäuses (2) und anschließend nur mit dem Presskolben (3d) der Kartusche (3) verbindbar ist.

4. Zuführungsvorrichtung nach einem oder mehreren der Ansprüche 1-3, **dadurch gekennzeichnet, dass** die untere Halbschale (2b) des Stützgehäuses (2) axial unverschiebbar an der vorderen Verschlussplatte (2c) festgelegt ist und dass die obere Halbschale (2a) des Stützgehäuses (2) bei geschlossenem Stützgehäuse (2) und eingelegter Kartusche (3) axial verschiebbar an dem Stützkäfig (4) gelagert ist.

5. Zuführungsvorrichtung nach einem oder mehreren der Ansprüche 1-4, **dadurch gekennzeichnet, dass** die Kartusche (3) an ihrem Außenumfang mit einer umlaufenden Mitnehmernut (3e) versehen ist, in welche beim Verschließen des Stützgehäuses (2) ein an der Innenseite der oberen Halbschale (2a) angeordneter Mitnehmervorsprung (2g) eingreift.

6. Zuführungsvorrichtung nach Anspruch 5, **dadurch gekennzeichnet, dass** die Kartusche (3) mit einer umlaufenden Positioniernut (3f) versehen ist, in welche bei geöffnetem Stützgehäuse (2) ein der oberen Halbschale (2a) zugeordnetes Schwenkblech (2f) eingreift, welches bereits beim Einlegen der Kartusche (3) in das geöffnete Stützgehäuse (2) die korrekte axiale Position der Kartusche (3) in Bezug auf die obere Halbschale (2a) festlegt.

7. Zuführungsvorrichtung nach einem oder mehreren der Ansprüche 1-6, **dadurch gekennzeichnet, dass** der Schubstange (5a) des axialen Stellantriebs (5) eine die jeweilige axiale Position feststellende Wegmeßvorrichtung (5b) zugeordnet ist.

## Claims

1. Feeding device for feeding pasty masses, in particular silicone, to an injection moulding machine, comprising a pressing cylinder which receives the pasty mass, and a pressing ram which is arranged axially in said pressing cylinder and squeezes the pasty mass out of a discharge nozzle of the pressing cylinder,
- wherein the pressing cylinder is designed as a cartridge (3) which contains the pasty mass, consists of a polymer and can be exchangeably inserted into a supporting housing (2) which supports the cartridge (3) on all sides and is connected to an axial actuator (5) for the pressing ram (3d) located in the cartridge (3),
- wherein the supporting housing (2) has a modular design and comprises two half-shells (2a, 2b), which support the casing of the cartridge (3) and are connected to one another such that they can be folded open laterally and are articulated about a swivel axis running parallel to the longitudinal axis of the cartridge (3), wherein the receiving space for the cartridge (3), enclosed by the half-shells (2a, 2b), is delimited axially at the front and at the rear by closure plates (2c, 2d), and the front closure plate (2c) is provided with a passage opening for the discharge nozzle (3c) of the cartridge (3), while the rear closure plate (2d) is provided with a passage opening for a push rod (5a) of the axial actuator (5), which push rod (5a) acts on the pressing ram (3d) of the cartridge (3),
- wherein the supporting housing (2) has a rigid, outer supporting cage (4), which is formed by the front closure plate (2c), at least two tie rods (4a) running parallel to the longitudinal axis (A) of the supporting housing (2) and arranged outside the half-shells (2a, 2b), and an abutment frame (4b), which runs parallel to the closure plates (2c, 2d) and to which the axial actuator (5) which displaces the push rod (5a) is fastened on the side facing away from the supporting housing (2).

2. Feeding device according to claim 1, **characterised in that** the front ends of the half-shells (2a, 2b) of the supporting housing (2) and the faces of the closure plates (2c, 2b) which face said front ends are provided with tongue and groove connectors which engage axially into one another, and that the rear closure plate (2d) can be displaced axially relative to the supporting cage (4).

3. Feeding device according to one of claims 1-2, **characterised in that**, following the insertion of the cartridge (3) into the supporting housing (2), the push rod (5a) of the axial actuator (5) can be connected by means of a locking device firstly only to the rear closure plate (2d) of the supporting housing (2) and then only to the pressing ram (3d) of the cartridge (3).

4. Feeding device according to one or more of claims 1-3, **characterised in that** the lower half-shell (2b) of the supporting housing (2) is fixed in an axially nondisplaceable manner on the front closure plate (2c) and that, with the supporting housing (2) closed and the cartridge (3) inserted, the upper half-shell (2a) of the supporting housing (2) is mounted in an axially displaceable manner on the supporting cage (4).

5. Feeding device according to one or more of claims 1-4, **characterised in that** the cartridge (3) is provided, on its outer circumference, with a circumferential driver groove (3e), into which a driver projection (2g) arranged on the inner side of the upper half-shell (2a) engages on closing the supporting housing (2).

6. Feeding device according to claim 5, **characterised in that** the cartridge (3) is provided with a circumferential positioning groove (3f), into which, when the supporting housing (2) is open, a swivel plate (2f) assigned to the upper half-shell (2a) engages, which swivel plate (2f) fixes the correct axial position of the cartridge (3) in relation to the upper half-shell (2a) when the cartridge (3) is inserted into the open supporting housing (2).

7. Feeding device according to one or more of claims 1-6, **characterised in that** the push rod (5a) of the axial actuator (5) is assigned a distance measuring device (5b) which determines the current axial position of the push rod (5a).

## Revendications

1. Dispositif d'amenée pour amener des matières pâteuses, en particulier de silicone, à une machine de moulage par injection, avec un vérin à presser recevant la matière pâteuse et un piston presseur disposé axialement dans ledit vérin à presser, qui fait sortir la matière pâteuse hors d'une buse d'exprimage du vérin à presser en la pressant,
dans lequel
le vérin à presser est réalisé en tant qu'une cartouche (3) contenant la matière pâteuse, qui est constituée d'un polymère et est insérée de manière interchangeable dans un boîtier d'appui (2), lequel soutient la cartouche (3) de tous les côtés et est relié à un entraînement de réglage axial (5) pour le piston presseur (3d) se trouvant dans la cartouche (3),
- dans lequel le boîtier d'appui (2) est réalisé de manière modulaire et présente deux demi-coques (2a, 2b) soutenant l'enveloppe de la cartouche (3), qui sont reliées l'une à l'autre de manière articulée autour d'un axe de pivotement s'étendant de manière parallèle par rapport à l'axe longitudinal de la cartouche (3) et de manière dépliable latéralement, dans lequel l'espace de réception, renfermé par les demi-coques (2a, 2b), pour la cartouche (3) est délimité axialement à l'avant et à l'arrière par des plaques de fermeture (2c, 2d) et la plaque de fermeture avant (2c) est pourvue d'une ouverture de passage pour la buse d'exprimage (3c) de la cartouche (3), tandis que la plaque de fermeture arrière (2d) est pourvue d'une ouverture de passage pour une tige de poussée (5a), agissant sur le piston presseur (3d) de la cartouche (3), de l'entraînement de réglage axial (5), et
- dans lequel le boîtier d'appui (2) présente une cage d'appui (4) extérieure rigide, qui est formée par la plaque de fermeture avant (2c), au moins deux tiges de poussée (4a) s'étendant de manière parallèle par rapport à l'axe longitudinal (A) du boîtier d'appui (2) et disposées à l'extérieur des demi-coques (2a, 2b) et un cadre de butée (4b) s'étendant de manière parallèle par rapport aux plaques de fermeture (2c, 2d), sur lequel l'entraînement de réglage axial (5) faisant coulisser la tige de poussée (5a) est fixé sur le côté opposé au boîtier d'appui (2).

2. Dispositif d'amenée selon la revendication 1, **caractérisé en ce que** les demi-coques (2a, 2b) du boîtier d'appui (2) sont pourvues sur leurs côtés frontaux et sur les faces, tournées vers lesdits côtés frontaux, des plaques de terminaison (2c, 2b) de liaisons rainure-languette s'imbriquant axialement les uns dans les autres, et que la plaque de fermeture arrière (2d) peut être coulissée axialement par rapport à la cage d'appui (4).

3. Dispositif d'amenée selon l'une quelconque des revendications 1 - 2, **caractérisé en ce que** la tige de poussée (5a) de l'entraînement de réglage axial (5) peut être reliée, après avoir placé la cartouche (3) dans le boîtier d'appui (2), au moyen d'un dispositif de verrouillage, en premier lieu seulement à la plaque de fermeture arrière (2d) du boîtier d'appui (2) puis seulement au piston presseur (3d) de la cartouche (3).

4. Dispositif d'amenée selon l'une quelconque ou plusieurs des revendications 1 - 3, **caractérisé en ce que** la demi-coque inférieure (2b) du boîtier d'appui (2) est fixée sans pouvoir coulisser axialement sur la plaque de fermeture avant (2c), et que la demi-coque supérieure (2a) du boîtier d'appui (2) est montée de manière à pouvoir coulisser axialement sur la cage d'appui (4) lorsque le boîtier d'appui (2) est fermé et que la cartouche (3) est placée.

5. Dispositif d'amenée selon l'une quelconque ou plusieurs des revendications 1 - 4, **caractérisé en ce que** la cartouche (3) est pourvue sur sa périphérie extérieure d'une rainure d'entraînement (3e) périphérique, avec laquelle une partie faisant saillie d'entraînement (2g) disposée sur le côté intérieur de la demi-coque supérieure (2a) vient en prise lors de la fermeture du boîtier d'appui (2).

6. Dispositif d'amenée selon la revendication 5, **caractérisé en ce que** la cartouche (3) est pourvue d'une rainure de positionnement (3f) périphérique, avec laquelle vient en prise, lorsque le boîtier d'appui (2) est ouvert, une tôle de pivotement (2f) associée à la demi-coque supérieure (2a), laquelle fixe la position axiale correcte de la cartouche (3) par rapport à la demi-coque supérieure (2a) déjà lorsque la cartouche (3) est placée dans le boîtier d'appui (2) ouvert.

7. Dispositif d'amenée selon l'une quelconque ou plusieurs des revendications 1 - 6, **caractérisé en ce qu'**un dispositif de mesure de déplacement (5b) relevant la position axiale respective est associé à la tige de poussée (5a) de l'entraînement de réglage axial (5).
